# EUROPEAN PATENT SPECIFICATION

(11) **EP 2 362 619 B1**
(45) Date of publication and mention of the grant of the patent: **11.09.2013**
(21) Application number: 11167974.2
(22) Date of filing: 29.03.2007
(51) Int. Cl.: H04M 1/725, H04M 1/60

(54) **Multi-button control headset for a mobile communication device**
Mobilkommunikationsendgerät mit Steckbuchsenanschluss
Appareil de communication mobile muni d'un port de connexion pour fiche de contact

(43) Date of publication of application: 31.08.2011
(62) Divisional of application: 10164613.1
(73) Proprietor: BlackBerry Limited, Waterloo ON N2L 3W8 (CA)
(72) Inventor: Lowles, Robert, Waterloo, Ontario N2T 2J5 (CA); Hui, Edward, Waterloo, Ontario N2T 2J3 (CA); Mak-Fan, David, Waterloo, Ontario N2K 4B1 (CA)
(74) Representative: Moore, Barry

(56) References cited:
- WO-A1-00/65803
- WO-A1-03/107701
- WO-A2-2007/024566
- US-A1- 2003 083 114
- US-A1- 2003 095 525

## Description

The present invention relates generally to headsets for a mobile communication device. More particularly, the present invention relates to a headset for a mobile communication device having a multi-button control and a standard headset jack.

When mobile communication devices were first developed, their main functionality was to provide a way for individuals to communicate with other individuals without the need for a landline. As the mobile communication device technology improved, further functionalities such as email, a contact database or a calendar were added. In the latest wave of mobile communication devices, new functionality such as an MP3 player and cameras have been added resulting in a multi-purpose mobile communication device.

In order for users to listen to an MP3 player, a headset is typically required which preferably includes a remote control so that the user is able to control the MP3 player within the mobile communication device. However, these headsets are typically individualized for each mobile communication device. Existing headsets include non-standard headset jacks which are then plugged into a corresponding slot within the unique mobile communication device. Therefore users are required to buy a specific headset which is dependent on the mobile communication device they are using.

Currently, headsets with standard jacks which are used with mobile communication devices have only a single button which is used to mute a call or to initiate voice activated dialing. Typically a single press, or a long press, can activate different functions. However, these single button controls can only provide two different control signals.

Alternatively, some headsets with multiple button controls are implemented with non-standard jacks and thusly, the mobile communication devices are required to be updated in order to be able to receive the non-standard jack. Therefore, additional hardware is required in each mobile communication device in order to receive the non-standard jack. Additional conductors are also required in each of the headsets.

It is, therefore preferred to provide a novel headset for a mobile communication device having a multi-button control using a standard headset jack.

US-A-2003/083114, discloses a navigational control for a wireless computer resource access device. The control includes headphones and a multiple buttons. A connector secured to the body of the control connects the control to a wireless access device.

### GENERAL

In one aspect, the invention may provide a headset for use with a mobile communication device, the headset comprising: a jack plug adapted to be received in a port of the mobile communication device; first and second speakers; a microphone; a multi-button control unit comprising a processor and a plurality of control buttons including a first control button and a second control button, the processor adapted to detect activation of any of the plurality of control buttons and, responsive to the detected activation, cause one of a plurality of control signals to be transmitted to the jack plug; and first and second speaker wires connecting the first and second speakers to the jack plug, and a microphone wire connecting the microphone to the jack plug; wherein activation of the first control button causes the processor to transmit a control signal corresponding to the first control button that causes the mobile communication device to execute a first command, and activation of the second control button causes the processor to transmit a control signal corresponding to the second control button that causes the mobile communication device to execute a second command, and wherein the transmitted control signal is transmitted to the jack plug using the microphone wire with an encoding control signal mode comprising a series of voltage pulses, each pulse representing a difference in voltage across the microphone wire relative to a ground wire.

The invention may be directed at a headset for a mobile communication device having a multi-button control and is implemented with a standard headset jack. The multi-buttons control may be decoded by a microprocessor after which an encoded signal is then transmitted, via the microphone line from the processor to the handset. In this manner, by using the standard jack, no additional hardware is required in the handset. Only software to decode the signal on the microphone input may be required on the handset.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 is a schematic diagram of a mobile communication device and headset;
Fig. 2 is a schematic diagram of circuitry for a headset;
Fig. 3 is a schematic diagram of circuitry for a headset in accordance with an embodiment;
Fig. 4 is a diagram of coding schemes for use with the headset;
Fig. 5 is a schematic diagram of circuitry for a headset in accordance with another embodiment; and
Fig. 6 is a flowchart outlining a method of headset use.

### DETAILED DESCRIPTION

Generally, one present embodiment provides a method and system for a headset for a mobile communication device. The headset comprises a multi-button control and uses a standard jack for connecting to the mobile communication device.

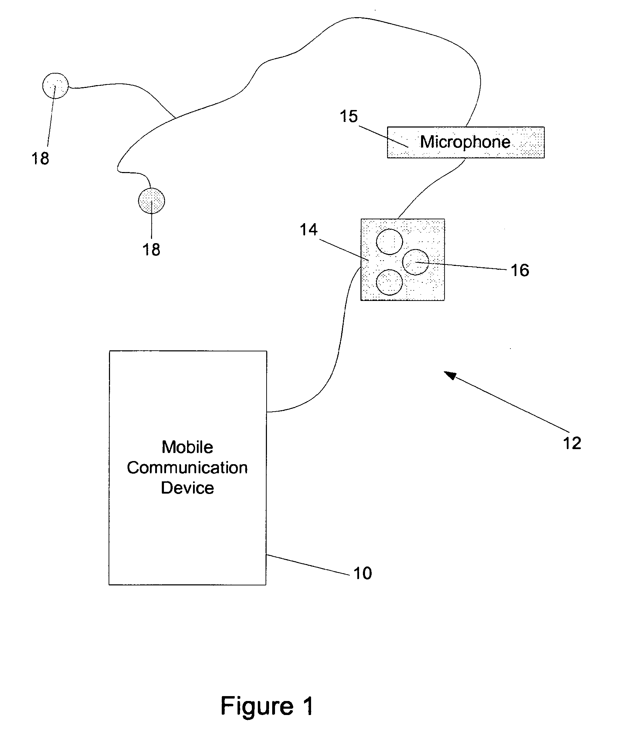

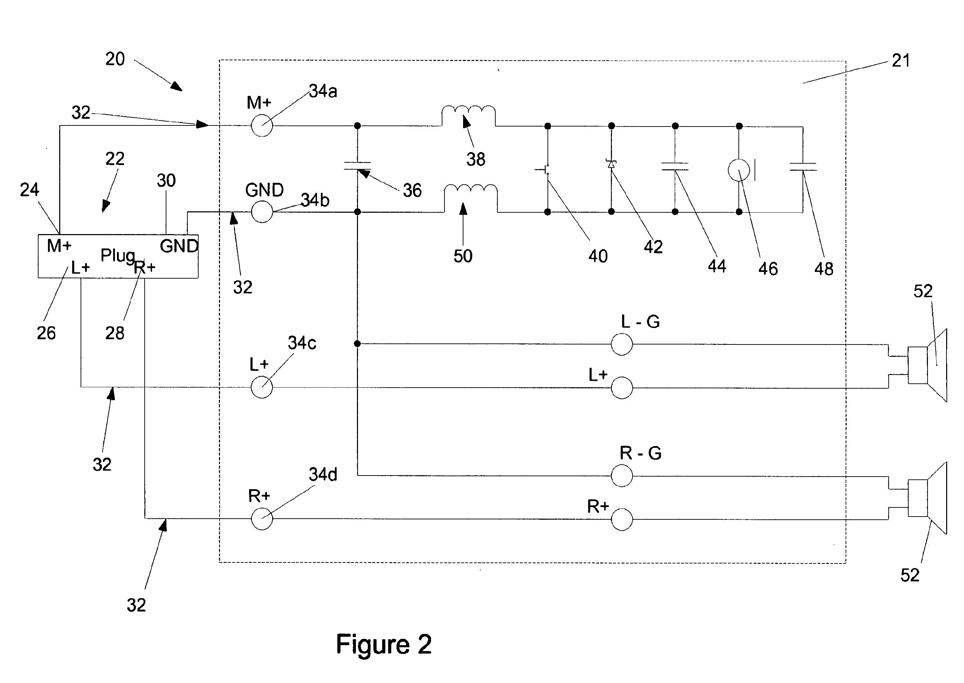

Turning to Figure 1, a schematic diagram of a mobile communication device, or handset, **10** having a headset **12** thereby connected is provided. The headset **12** further comprises a multiple button controller **14** having a plurality of buttons **16**. The number of buttons is theoretically limitless however, the number is dictated by the size of the controller **14**. The headset **12** further includes at least one ear bud **18** each housing a speaker (as shown in Figure 2). The headset **12** is connected to the mobile communication device **10** via standard jack. A microphone **15** is also included in the headset **12**.

Turning to Figure 2, circuitry **20**, typically mounted to a printed circuit board assembly **21**, for a standard headset **12** is shown. The headset **12** includes a standard jack, or plug, **22** for connecting the headset to the handset. The plug **22** comprises a microphone portion **24**, a left speaker portion **26**, a right speaker portion **28** and a ground portion **30**. The jack **22** is connected to the circuitry **20** via a plurality of wires **32**.

In the current embodiment, the circuitry **20** comprises a set of connectors **34** for receiving the wires **32** from their corresponding locations within the jack **22**. The microphone connector **34a** is connected to a first capacitor **36** and an inductor **38**. An output of the inductor **38** is connected to plurality of elements connected in parallel. The plurality of elements includes a switch **40**, a zener diode **42**, a second capacitor **44**, a microphone **46** and a third capacitor **48**. A second inductor **50** is located between the ground connector **34b** and the output of the parallel elements. The output from the second inductor **50** is connected to ground along with one side of a pair of speakers **52**. The left speaker portion connector **34c** and the right speaker portion connector **34d** are also connected to their respective, left and right speakers **52**. As will be understood, the speakers are typically located within the ear buds **18** of the headset **12** which are then inserted into a user's ears so that they may listen of the output from the mobile communication device.

In operation, the zener diode **42** is used to control the electrostatic discharge (ESD) which may be experienced within the headset **12**. The inductor **38** and the first capacitor **36** provide a wide band filter for the various General Packet radio Services (GPRS) bands. This filter reduces and/or prevents the headset from picking up and transmitting GSM pulses via the microphone line. This is also known as GSM buzz. Finally, the switch **40** shorts out the microphone bias current which is detected by the handset as a signal.

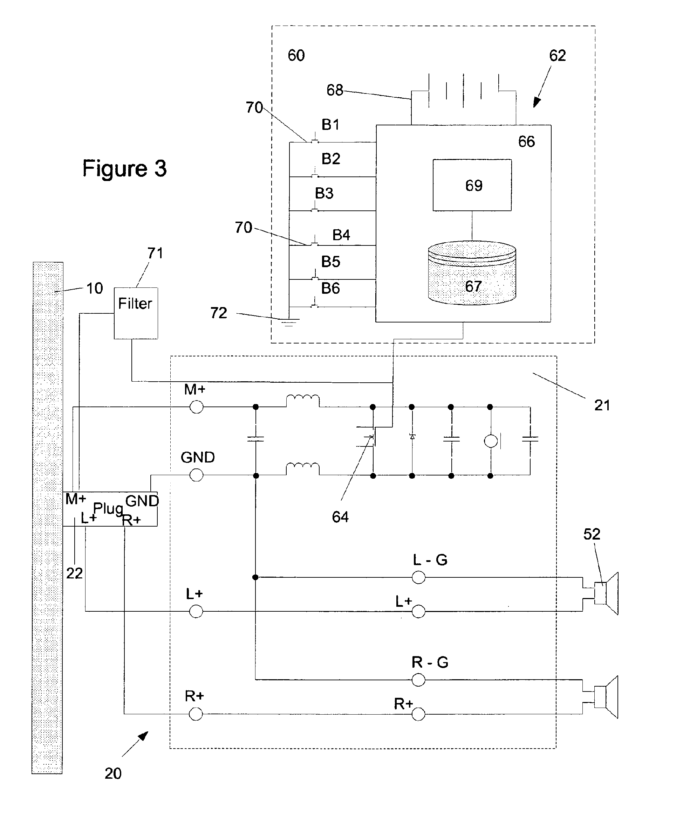

Turning to Figure 3, a schematic diagram of an embodiment of a headset 12 having a multi-button control **60** in accordance with one embodiment is shown. In each of the embodiments, the headset **12** is implemented with the standard headset jack **22** for connection with the mobile communication device **10**. In this embodiment, the circuitry **62** for implementing the multi-button control **60** is shown connected to the standard headset circuitry **20** of Figure 2 with one substitution. The switch **40** is replaced with a Field-Effect Transistor (FET) **64**. The implementation of the multi-button control using a standard headset and standard jack provides the benefit that mobile communication devices do not have to be altered in order to operate with the headset. In this manner, since the mobile communication device does not have to be updated to include extra hardware to receive the headset jack, the mobile communication device may be able to receive the headset disclosed herein or existing headsets with standard jacks and one control button.

Therefore, in order for the handset to recognize which type of headset has been connected, the handset preferably includes circuitry to make this determination. In one embodiment, when the headset detects a microphone bias voltage, a predetermined signal may be transmitted by the headset to be decoded by the handset. This may be implemented by simply connecting an output of a controller **66** to the microphone portion of the plug output of the processor. A filter network **71** may also be located along this connection in order to reduce noise.

The circuitry **62** includes the controller **66**, such as a processor, preferably having low power consumption and a battery **68**. The battery **68** is preferably a rechargeable battery or a super capacitor which may be charged by a microphone bias when the headset is connected to the mobile communication device. If a microphone bias is used, a voltage boost circuit is likely to be required to boost the voltage on the microphone bias to above 1.8 V. Alternatively, the battery may be a one-time use battery and replaced when the power has been entirely discharged from the battery **68**.

A series of switches **70**, representing each button on the multi-button control, is connected to the processor **66**. In Figure 3, the switches **70** have been labeled as B1, B2, B3, B4, B5 and B6. For instance, B1 may represent a mute button, B2 may represent a volume up button, B3 may represent a volume down button, B4 may represent a rewind button, B5 may represent a fast forward button and B6 may represent a play/stop button. As will be understood, the number of switches is limitless but is dependent on the physical size of the multi-button control. Each of the switches is also connected to ground **72**. Within the processor is a memory, or database **67**, for storing control information and a module **69** for determining which switch **70** has been pressed.

In the present embodiment, an output of the processor **66** is connected to the FET **64**. As will be described below with respect to the operation of the control **60**, this connection provides the necessary signals to control the handset.

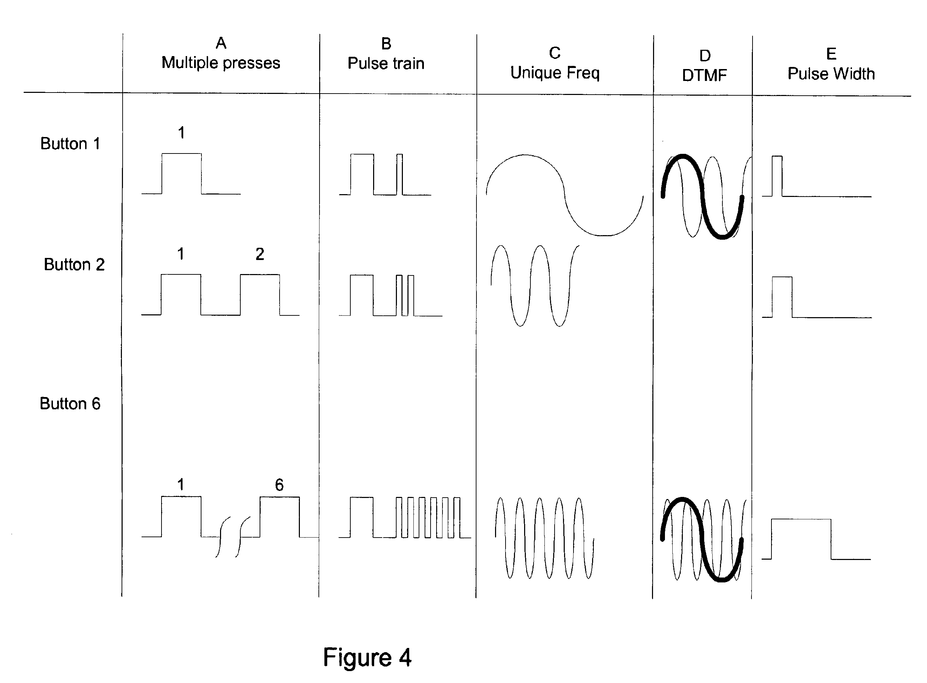

Figure 4 provides examples of various methods of encoding the control signals being transmitted from the headset to the handset. Encoding control signal mode A is directed at multiple presses, encoding control signal mode B is directed at pulse trains, encoding control signal mode C is directed at unique frequencies, encoding control signal mode D is directed a dual tone multiple frequency (DTMF) and encoding control signal mode E is directed at pulse width. It will be understood that each headset preferably operates in only one of the encoding control signal modes but in some embodiments, the headset may operate under multiple control signal modes depending on the required functionality.

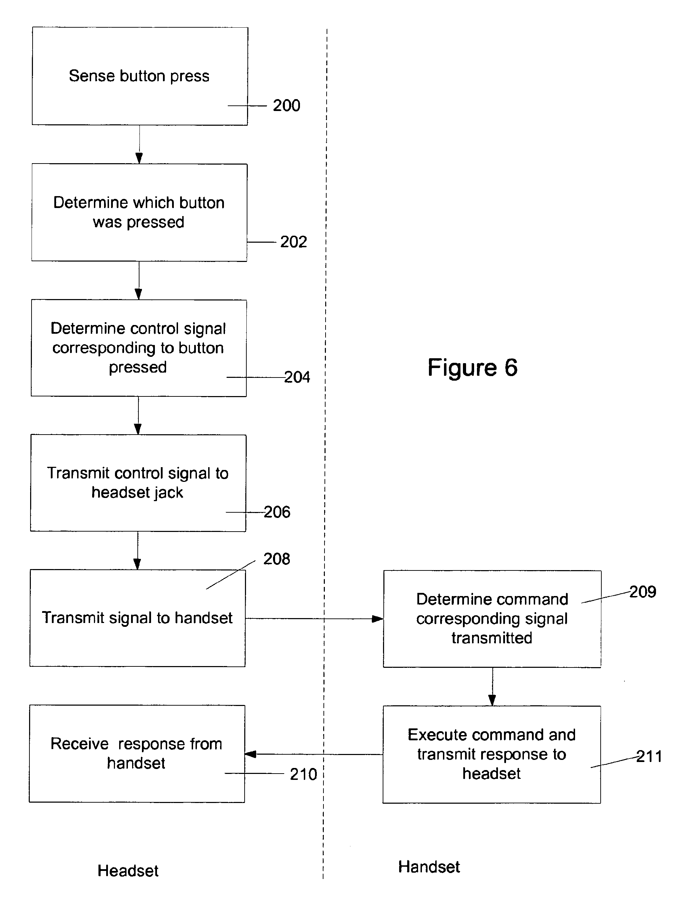

In this embodiment, the circuitry is implemented for a multi-button control 60 operating under control signal mode A, control signal mode B or control signal mode E, as shown in Figure 4. As will be understood, each headset preferably operates in a single control signal mode. However, it will be understood that some embodiments may employ multiple control signal modes. When one of the series of switches **70**, or buttons, is pushed, a signal is transmitted to the processor **66** from the switch. The module **69** within the processor **66** receives this signal (step **200** of Figure 6) and then determines which of the switches **70** has been pressed (step **202**). After determining the switch, the module then accesses the database **67** to determine a control signal corresponding to or associated with the pressed switch **70** (step **204**).

For instance, if the user wishes to play music, after pressing B6, the software module **69** determines B6 was pressed and accesses the database/memory **67** to determine the signal that needs to be transmitted from the multi-button control to play music.

As shown in Figure 4, the signal corresponding to B6 for mode A, is a series of 6 pulses. The pulses are then transmitted from the processor **66** to the FET **64**. The pulses are recognized by the FET **64** which then translates this pulse signal to the jack **22** (step **206**) by shorting out the microphone to ground. The jack **22** then transmits this information to the handset (step **208**) which receives the pulse signal. A processor within the handset then processes the pulse signal to determine the command corresponding to the signal transmitted (step **209**). In this example, the processor determines that a play music command has been issued and then executes the command and transmits the response to the headset (step **211**). Therefore, in this example, the mobile communication device plays music which is then transmitted back through the jack **22** to the headset which then receives the response and transmits the music to the speakers (step **210**).

The user is then able to enjoy listening to music on their headset. Similarly, if music is already playing, the user may choose to stop the music, turn the volume up or down by pressing the relevant button. As before, the method outlined in Figure 6 is performed to transmit the necessary signal to the handset to have the command be performed.

In an alternative embodiment, for instance if the multiple button control was operating in encoding control signal mode B, using a pulse train, the nature of the signals being transmitted from the processor to the headset are shown in Figure 4. A start pulse is typically transmitted to the FET indicating that a button has been pressed. The start pulse is then followed up with a series of pulses corresponding to the button number that was pressed. For instance if B1 is pressed, a single pulse is provided after the start pulse, if B2 is pressed, two pulses are provided. Similar pulse streams are provided for buttons B3, B4, B5 and B6.

In a more specific example, the start pulse may be a 20ms pulse with a 10ms break before the transmission of the stream of control signal pulses, each pulse lasting for 1ms.

In another embodiment, when square wave pulses are used, the circuitry further includes a set of electronic elements which limit the slew rate of the square wave pulse in order to reduce the potential of the buttons from being heard in the audio transmitted to the speakers. In one embodiment, this may be implemented by adding a resistor/capacitor (RC) network between the FET and the processor **66**. Finer slew rate control may be implemented by standard pulse width modulation (PWM) methods.

The pulse train is then transmitted from the FET to the headset **10** via the jack 22. The processor within the headset **10** recognizes the start pulse and processes the following series of pulses to determine which button is pressed. After determining the command from the control, the mobile communication proceeds to execute the demand and the result is transmitted to the user via the speakers.

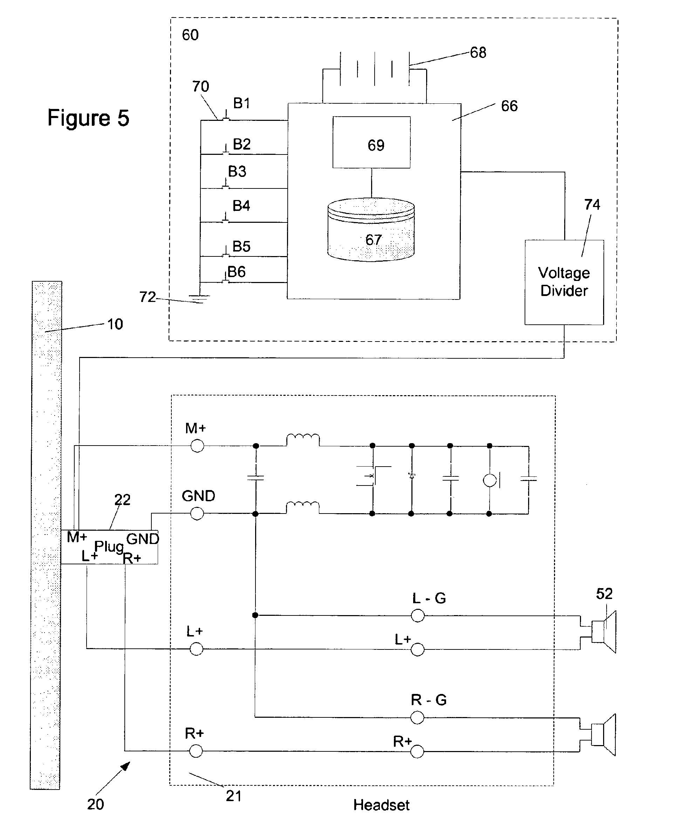

Turning to Figure 5, a second embodiment of a multiple button control **14** for a mobile communication device **10** is shown. In this embodiment, the output of the processor is directed connected directly to the jack **22**, however the output is transmitted through a voltage divider **74** which is used to ensure that the signal being transmitted to the jack is at a predetermined level comparable to the microphone output. Operation of the embodiment is in an identical manner with respect to the method outlined in Figure 6. However, the nature of the signals being transmitted by the processor differs. In this embodiment, when operating in Mode C, the control signals are transmitted at different frequencies such that the jack transmits the signal to the headset which deciphers the frequency and then performs the requested task. In an alternative embodiment, the output of the processor may also be connected to the FET **64**.

In one implementation, if B1 is pressed, the processor 66 transmits a signal at 3400Hz which is then received by the handset **10** via the jack **22**. Once the handset receives a signal at 3400Hz, the processor recognizes that B1 has been pressed. Similarly, if B2 is pressed, a signal is transmitted at 3600Hz to the mobile communication device. In order to prevent any interference, each of the frequencies which are selected and associated with the buttons are outside of the audible range so the user does not experience any interference or distraction.

The battery **68** allows the control to be self-sufficient and does not drain the battery within the mobile communication device. Therefore by utilizing a low power processor, the life of the battery **68** is prolonged and does not have to be changed on a constant basis. The importance of the battery is that no additional connection is required from the handset to provide power to the processor in the headset.

If the headset is operating under Mode D, the signals are selected and differentiated using DTMF.

In an alternative embodiment, the processor **66** may be replaced by an Application Specific Integrated Circuit (ASIC) to lower cost, power consumption and size of the control **16**.

In an alternative embodiment, where multiple encoding control signal modes are combined, different functionalities may be provided which are controlled via separate control signal modes. For instance Mode A may be used to control an MP3 player while Mode B may be used as a joystick to play a game on the mobile communication device. In this embodiment, the multiple button control includes a switch or control to determine which mode the headset is operating in order to ensure that the encoding is performed correctly by the processor **66**. Another embodiment may include the controller **16** being used as a multi-media control in one mode and as a phone dialer in a second mode.

The embodiment having multiple encoding control signal modes may also allow the headset to have a more universal use in that different handsets may require specific encoding control signal modes.

Alternatively, mobile communication devices may operate currently under one mode but in future implementations, may operate under a second mode. In this manner, the headset may be used for both the currently and future versions of a mobile communication device provide more flexibility to the user.

In the preceding description, for purposes of explanation, numerous details are set forth in order to provide a thorough understanding of the embodiments of a novel headset. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A headset (12) for use with a mobile communication device (10), the headset (12) comprising:
a jack plug (22) adapted to be received in a port of the mobile communication device (10);
first and second speakers (52);
a microphone (15);
a multi-button control unit (14, 60) comprising a processor (66) and a plurality of control buttons (16) including a first control button and a second control button, the processor (66) adapted to detect activation of any of the plurality of control buttons (16) and, responsive to the detected activation, cause one of a plurality of control signals to be transmitted to the jack plug (22); and
first and second speaker wires (32) connecting the first and second speakers (52) to the jack plug (22), and a microphone wire (32) connecting the microphone (15) to the jack plug (22);
wherein activation of the first control button causes the processor (66) to transmit a control signal corresponding to the first control button that causes the mobile communication device (10) to execute a first command, and activation of the second control button causes the processor (66) to transmit a control signal corresponding to the second control button that causes the mobile communication (10) device to execute a second command, and
wherein the transmitted control signal is transmitted to the jack plug (22) using the microphone wire (32) with an encoding control signal mode comprising a series of voltage pulses, each pulse representing a difference in voltage across the microphone wire (32) relative to a ground wire.

2. The headset (12) of claim 1, wherein the processor (66) is adapted to encode the transmitted control signal in a mode selected from the group consisting of: a multiple presses control signal mode, a pulse train control signal mode, a unique frequency control signal mode, and a dual tone multiple frequency (DTMF) control signal mode.

3. The headset of any preceding claim adapted to control an audio function of the mobile communication device in which the first and second commands include one or more of mute, volume up, volume down, rewind, fast forward and playstop.

4. The headset (12) of claim 1, wherein the processor (66) is adapted to generate the first and second control signals to be transmitted with a mode selected from the group consisting of: a multiple presses control signal mode, a pulse train control signal mode, a unique frequency control signal mode, a dual tone multiple frequency (DTMF) control signal mode, and a pulse width control signal mode.

5. The headset (12) of any one of the preceding claims, wherein the plurality of control buttons (16) further comprises a play/stop button, said processor (66) being configured to transmit a pulse series in response to activation of the play/stop button.

6. The headset (12) of any one of the preceding claims, wherein the plurality of control buttons (16) further comprises a fast forward button, said processor (66) being configured to transmit a pulse series in response to activation of the fast forward button.

7. The headset (12) of any one of the preceding claims, wherein the plurality of control buttons (16) further comprises a rewind button, said processor (66) being configured to transmit a pulse series in response to activation of the rewind button.

## Patentansprüche

1. Hörsprechgarnitur (12) zur Verwendung mit einer Mobilkommunikationsvorrichtung (10), wobei die Hörsprechgarnitur (12) Folgendes aufweist:
einen Klinkenstecker (22), der dazu ausgelegt ist, in einer Anschlussbuchse der Mobilkommunikationsvorrichtung (10) aufgenommen zu werden,
einen ersten und einen zweiten Lautsprecher (52),
ein Mikrofon (15),
eine Mehrknopf-Steuereinheit (14, 60) mit einem Prozessor (66) und einer Vielzahl an Steuerknöpfen (16) inklusive einem ersten Steuerknopf und einem zweiten Steuerknopf, wobei der Prozessor (66) dazu ausgelegt ist, eine Aktivierung beliebiger der Vielzahl an Steuerknöpfen (16) zu erfassen und als Reaktion auf die erfasste Aktivierung zu veranlassen, dass eines aus einer Vielzahl an Steuersignalen an den Klinkenstecker (22) übermittelt wird, und
eine erste und eine zweite Lautsprecherleitung (32), die den ersten und den zweiten Lautsprecher (52) mit dem Klinkenstecker (22) verbinden, und eine Mikrofonleitung (32), die das Mikrofon (15) mit dem Klinkenstecker (22) verbindet,
wobei eine Aktivierung des ersten Steuerknopfes veranlasst, dass der Prozessor (66) ein Steuersignal übermittelt, das dem ersten Steuerknopf entspricht, der veranlasst, dass die Mobilkommunikationsvorrichtung (10) eine erste Anweisung auszuführen, und eine Aktivierung des zweiten Steuerknopfes veranlasst, dass der Prozessor (66) ein Steuersignal übermittelt, das dem zweiten Steuerknopf entspricht, der veranlasst, dass die Mobilkommunikationsvorrichtung (10) eine zweite Anweisung auszuführen, und
das übermittelte Steuersignal an den Klinkenstecker (22) unter Verwendung der Mikrofonleitung (32) mit einem Encodier-Steuersignal-Modus übermittelt wird, der eine Folge an Spannungspulsen aufweist, wobei jeder Puls eine Spannungsdifferenz über der Mikrofonleitung (32) im Verhältnis zu einer Masseleitung darstellt.

2. Hörsprechgarnitur (12) nach Anspruch 1, wobei der Prozessor (66) dazu ausgelegt ist, das übermittelte Steuersignal in einem Modus zu kodieren, der aus der Gruppe ausgewählt ist, die aus einem Mehrfachdrück-Steuersignalmodus, einem Pulsfolgen-Steuersignalmodus, einem Einzelfrequenz-Steuersignalmodus und einem Dualtonmehrfachfrequenz-Steuersignalmodus besteht.

3. Hörsprechgarnitur nach einem der vorhergehenden Ansprüche, die dazu ausgelegt ist, eine Audiofunktion der Mobilkommunikationsvorrichtung zu steuern, in der die erste und die zweite Anweisung eines oder mehrere aus Stummschaltung, Erhöhen der Lautstärke, Herabsetzen der Lautstärke, Zurückspulen, Vorspulen und Abspielenstopp aufweisen.

4. Hörsprechgarnitur (12) nach Anspruch 1, wobei der Prozessor (66) ausgelegt ist, das erste und das zweite Steuersignal zu erzeugen, die mit einem Modus übermittelt werden sollen, der aus der Gruppe ausgewählt ist, die aus einem Mehrfachdrück-Steuersignalmodus, einem Pulsfolgen-Steuersignalmodus, einem Einzelfrequenz-Steuersignalmodus, einem Dualtonmehrfachfrequenz-Steuersignalmodus und einem Pulsbreiten-Steuersignalmodus besteht.

5. Hörsprechgarnitur (12) nach einem der vorhergehenden Ansprüche, wobei die Vielzahl an Steuerknöpfen (16) ferner einen Abspiel-/Stoppknopf aufweist, wobei der Prozessor (66) dazu konfiguriert ist, als Reaktion auf eine Aktivierung des Abspiel-/Stoppknopfes eine Pulsfolge zu übermitteln.

6. Hörsprechgarnitur (12) nach einem der vorhergehenden Ansprüche, wobei die Vielzahl an Steuerknöpfen (16) ferner einen Vorspulknopf aufweist, wobei der Prozessor (66) dazu konfiguriert ist, als Reaktion auf eine Aktivierung des Vorspulknopfes eine Pulsfolge zu übermitteln.

7. Hörsprechgarnitur (12) nach einem der vorhergehenden Ansprüche, wobei die Vielzahl an Steuerknöpfen (16) ferner einen Rückspulknopf aufweist, wobei der Prozessor (66) dazu konfiguriert ist, als Reaktion auf eine Aktivierung des Rückspulknopfes eine Pulsfolge zu übermitteln.

## Revendications

1. Casque d'écoute (12) destiné à être utilisé avec un dispositif de communication mobile (10), le casque d'écoute (12) comprenant :
un connecteur mâle (22) adapté pour être reçu dans un port du dispositif de communication mobile (10) ;
des premier et deuxième haut-parleurs (52) ;
un microphone (15) ;
une unité de commande à boutons multiples (14, 60) comprenant un processeur (66) et une pluralité de boutons de commande (16) comportant un premier bouton de commande et un deuxième bouton de commande, le processeur (66) étant adapté pour détecter l'activation d'un bouton quelconque de la pluralité de boutons de commande (16) et, en réponse à l'activation détectée, pour entraîner la transmission d'un signal d'une pluralité de signaux de commande au connecteur mâle (22) ; et
des premier et deuxième câbles de haut-parleur (32) reliant les premier et deuxième haut-parleurs (52) au connecteur mâle (22), et un câble de microphone (32) reliant le microphone (15) au connecteur mâle (22) ;
dans lequel l'activation du premier bouton de commande amène le processeur (66) à transmettre un signal de commande correspondant au premier bouton de commande qui amène le dispositif de communication mobile (10) à exécuter une première commande, et l'activation du deuxième bouton de commande amène le processeur (66) à transmettre un signal de commande correspondant au deuxième bouton de commande qui amène le dispositif de communication mobile (10) à exécuter une deuxième commande, et
dans lequel le signal de commande transmis est transmis au connecteur mâle (22) en utilisant le câble de microphone (32) avec un mode de signal de commande de codage comprenant une série d'impulsions de tension, chaque impulsion représentant une différence de tension à travers le câble de microphone (32) par rapport à un câble de mise à la terre.

2. Casque d'écoute (12) de la revendication 1, dans lequel le processeur (66) est adapté pour coder le signal de commande transmis dans un mode choisi dans le groupe constitué : d'un mode de signal de commande par multiples presses, d'un mode de signal de commande par train d'impulsions, d'un mode de signal de commande par fréquence unique, et d'un mode de signal de commande par multifréquence à deux tonalités (DTMF).

3. Casque d'écoute de l'une des revendications précédentes, 1 adapté pour commander une fonction audio du dispositif de communication mobile où les première et deuxième commandes comportent une ou plusieurs fonctions parmi muet, augmenter le volume, baisser le volume, rebobiner, avance rapide et lecture/arrêt.

4. Casque d'écoute (12) de la revendication 1, dans lequel le processeur (66) est adapté pour générer les premier et deuxième signaux de commande à transmettre avec un mode choisi dans le groupe constitué : d'un mode de signal de commande par multiples presses, d'un mode de signal de commande par train d'impulsions, d'un mode de signal de commande par fréquence unique, d'un mode de signal de commande par multifréquence à deux tonalités (DTMF), et d'un mode de signal de commande par largeur d'impulsion.

5. Casque d'écoute (12) de l'une quelconque des revendications précédentes, dans lequel la pluralité de boutons de commande (16) comprend en outre un bouton lecture/arrêt, ledit processeur (66) étant configuré pour transmettre une série d'impulsions en réponse à l'activation du bouton lecture/arrêt.

6. Casque d'écoute (12) de l'une quelconque des revendications précédentes, dans lequel la pluralité de boutons de commande (16) comprend en outre un bouton d'avance rapide, ledit processeur (66) étant configuré pour transmettre une série d'impulsions en réponse à l'activation du bouton d'avance rapide.

7. Casque d'écoute (12) de l'une quelconque des revendications précédentes, dans lequel la pluralité de boutons de commande (16) comprend en outre un bouton de rebobinage, ledit processeur (66) étant configuré pour transmettre une série d'impulsions en réponse à l'activation du bouton de rebobinage.
